# EUROPÄISCHE PATENTSCHRIFT

(11) **EP 1 971 705 B1**
(45) Veröffentlichungstag und Bekanntmachung des Hinweises auf die Patenterteilung: **27.06.2012**
(21) Anmeldenummer: 06830657.0
(22) Anmeldetag: 15.12.2006
(51) Int. Cl.: C23C 28/00, F01D 5/28

(54) **SCHICHTSYSTEM MIT ZWEI PYROCHLORPHASEN**
LAYER SYSTEM COMPRISING TWO PYROCHLORE PHASES
SYSTEME DE COUCHES COMPORTANT DEUX PHASES PYROCHLORE

(30) Priorität: 09.01.2006 EP 06000337
(43) Veröffentlichungstag der Anmeldung: 24.09.2008
(73) Patentinhaber: SIEMENS AKTIENGESELLSCHAFT, 80333 München (DE)
(72) Erfinder: SCHUMANN, Eckart, 45468 Mülheim an der Ruhr (DE); SUBRAMANIAN, Ramesh, Oviedo, FL 32765 (DE); KAISER, Axel, 41462 Neuss (DE)
(86) Internationale Anmeldenummer: PCT/EP2006/069766
(87) Internationale Veröffentlichungsnummer: WO 2007/080041

(56) Entgegenhaltungen:
- EP-A- 1 707 653
- EP-A- 1 783 248
- EP-B1- 0 944 746
- WO-A-2005/019370
- WO-A1-03/057941
- US-A1- 2004 180 233

## Beschreibung

Die Erfindung betrifft ein Schichtsystem mit Pyrochloren gemäß Anspruch 1.

Ein solches Schichtsystem weist ein Substrat mit einer Metalllegierung auf der Basis von Nickel oder Kobalt auf. Derartige Erzeugnisse dienen vor allem als Bauteil einer Gasturbine, insbesondere als Gasturbinenschaufeln oder Hitzeschilde. Die Bauteile sind einem Heißgasstrom von aggressiven Verbrennungsgasen ausgesetzt. Daher müssen sie hohen thermischen Belastungen Stand halten können. Des Weiteren ist es erforderlich, dass diese Bauteile oxidations- und korrosions-beständig sind. Vor allem an bewegliche Bauteile, z. B. Gasturbinenschaufeln, aber auch an statische Bauteile sind fernerhin mechanische Anforderungen zu stellen. Die Leistung und der Wirkungsgrad einer Gasturbine, in der heißgasbelastbare Bauteile Verwendung finden, steigen mit zunehmender Betriebstemperatur. Daher wurde immer wieder versucht, durch Verbesserung des Beschichtungssystems eine höhere Leistungsfähigkeit von Gasturbinen zu erzielen.

Um einen hohen Wirkungsgrad und eine hohe Leistung zu erzielen, werden durch die hohen Temperaturen besonders belastete Komponenten der Gasturbinen mit einem keramischen Werkstoff beschichtet. Dieser wirkt als Wärmedämmschicht zwischen dem Heißgasstrom und dem metallischen Substrat.

Vor dem aggressiven Heißgasstrom wird der metallische Grundkörper durch Beschichtungen geschützt. Dabei weisen moderne Bauteile zumeist mehrere Beschichtungen auf, die jeweils spezifische Aufgaben erfüllen. Es liegt somit ein Mehrschichtsystem vor.

Die EP 0 944 746 B1 offenbart die Verwendung von Pyrochloren als Wärmedämmschicht.

Jedoch sind für den Einsatz eines Materials als Wärmedämmschicht nicht nur gute wärmedämmende Eigenschaften notwendig, sondern auch eine gute Anbindung an das Substrat.

Die EP 0 992 603 A1 offenbart ein Wärmedämmschichtsystem aus Gadoliniumoxid und Zirkonoxid, das keine Pyrochlorstruktur aufweisen soll.

Dokument WO2005019370 offenbart ein Wärmedämmstoff und Anordnung einer Wärmedämmschicht. Der Wärmedämmstoff enthält zumindest ein Pyrochlorphase aus der Gruppe Gadoliniumzirkonat, Gadoliniumhafnat, etc. und Mischungen.

Dokument WO03/057941 offenbart einen keramischen Werkstoff für eine Wärmedämmschicht enthaltend wenigstens eine Pyrochlorverbindung oder eine Mischung von Pyrochlorverbindungen, die Gadolinium aufweist. Der Gehalt von Pyrochloverbindungen in der keramischen Schicht ist von 0,1-50 Gew %.

Es ist daher Aufgabe der Erfindung ein Schichtsystem aufzuzeigen, das gute wärmedämmende Eigenschaften sowie eine gute Anbindung an das Substrat und damit eine lange Lebensdauer des gesamten Schichtsystems aufweist.

Die Aufgabe wird gelöst durch ein Schichtsystem gemäß Anspruch 1.

In den Unteransprüchen sind weitere vorteilhafte Maßnahmen aufgeführt, die beliebig in vorteilhafter Art und Weise miteinander kombiniert werden können.

Der Erfindung liegt die Erkenntnis zugrunde, dass das gesamte System als Einheit betrachtet werden muss und nicht einzelne Schichten oder einzelne Schichten untereinander isoliert von einander betrachtet und optimiert werden dürfen, um eine lange Lebensdauer zu erzielen.

Das erfindungsgemäße Schichtsystem weist eine äußere keramische Schicht auf, die eine Mischung aus zwei Pyrochlorphasen aufweist, die besonders gute thermische Eigenschaften (an ein Substrat eines Bauteils angepasster Ausdehnungskoeffizient, geringer Wärmeleitkoeffizient) aufweist und sehr gut harmoniert mit einer Zwischenschicht und dem Substrat des Bauteils. Durch das Mischungsverhältnis dieser zwei Pyrochlorphasen können die Eigenschaften der keramischen Schicht an das Substrat und die Zwischenschicht eingestellt werden.

Ausführungsbeispiele der Erfindung werden nachfolgend unter Bezugnahme auf die Zeichnungen noch näher erläutert.

Es zeigen
- Figur 1: ein erfindungsgemäßes Schichtsystem,
- Figur 2: eine Auflistung von Superlegierungen,
- Figur 3: eine Gasturbine,
- Figur 4: eine perspektivische Ansicht einer Turbinenschaufel,
- Figur 5: eine perspektivische Ansicht einer Brennkammer.

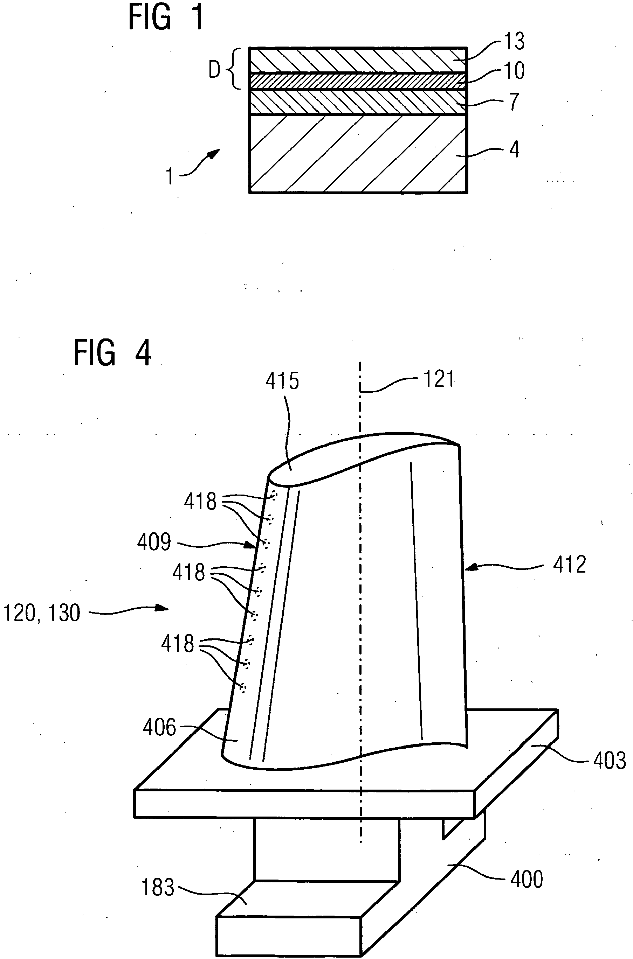

Figur 1 zeigt ein erfindungsgemäßes Schichtsystem 1.

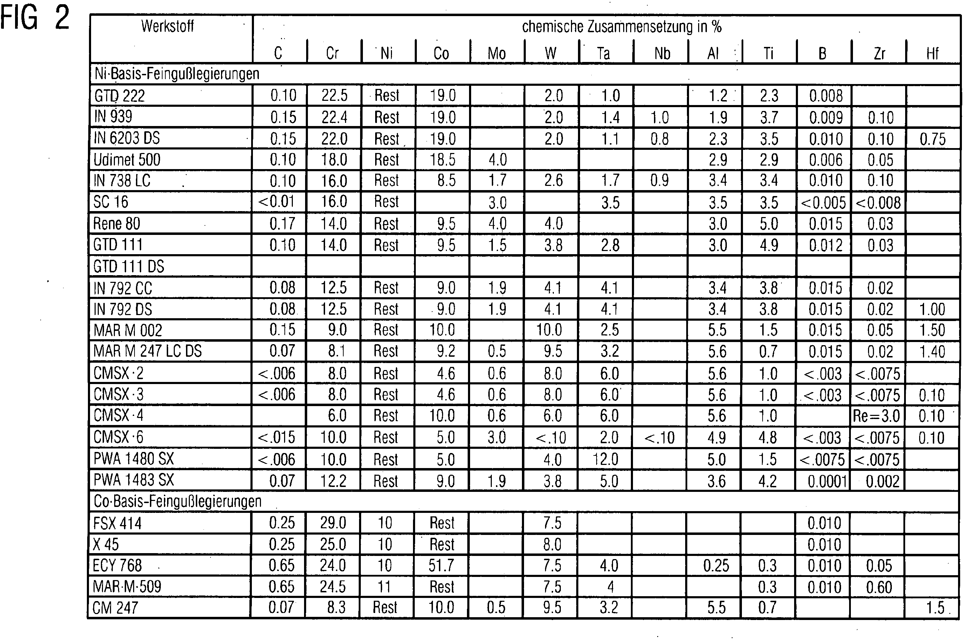

Das Schichtsystem 1 besteht aus einem metallischen Substrat 4, das insbesondere für Bauteile bei hohen Temperaturen aus einer nickel- oder kobaltbasierten Superlegierung (Fig. 2) besteht.

Direkt auf dem Substrat 4 ist vorzugsweise eine metallische Anbindungsschicht 7 MCrAlX, vorzugsweise des Typs NiCoCrALX vorhanden, die vorzugsweise entweder

| | |
|---|---|
| (11 - 13)wt% | Kobalt, insbesondere 12% Co |
| (20 - 22)wt% | Chrom, insbesondere 21% Cr |
| (10,5 - 11,5)wt% | Aluminium, insbesondere 11% AL |
| (0,3 - 0,5)wt% | Yttrium, insbesondere 0,4% Y |
| (1,5 - 2,5)wt% | Rhenium und insbesondere 2,0 Re |

Rest Nickel
oder vorzugsweise

| | |
|---|---|
| (24 - 26)wt% | Kobalt, insbesondere 25% Co |
| (16 - 18)wt% | Chrom, insbesondere 17% Cr |
| (9 - 11)wt% | Aluminium, insbesondere 10% AL |
| (0,3 - 0,5)wt% | Yttrium, insbesondere 0,4% Y |
| (1 - 2)wt% | Rhenium und insbesondere 1,5% Re |

Rest Nickel aufweist
oder vorzugsweise

| | |
|---|---|
| 29% - 31% | Nickel, insbesondere 30% Nickel, |
| 27% - 29% | Chrom, insbesondere 28% Chrom, |
| 7% - 9% | Aluminium, insbesondere 8% Aluminium, |
| 0,5% - 0,7% | Yttrium, insbesondere 0,6% Yttrium, |
| 0,6% - 0,8% | Silizium, insbesondere 0,7% Silizium und |

Rest Kobalt aufweist,
oder vorzugsweise aus

| | |
|---|---|
| 27% - 29% | Nickel, insbesondere 28% Nickel, |
| 23% - 25% | Chrom, insbesondere 24% Chrom, |
| 9% - 11% | Aluminium, insbesondere 10% Aluminium, |
| 0,5% - 0,7% | Yttrium, insbesondere 0,6% Yttrium und, |

Rest Kobalt aufweist.

Vorzugsweise besteht die Schutzschicht 7 aus einer dieser Legierungen.

Auf dieser metallischen Anbindungsschicht 7 ist bereits vor dem Aufbringen weiterer keramischer Schichten eine Aluminiumoxidschicht entstanden oder während des Betriebs entsteht eine solche Aluminiumoxidschicht (TGO).

Auf der metallischen Anbindungsschicht 7 oder auf der Aluminiumoxidschicht (nicht dargestellt) ist vorzugsweise eine innere keramische Schicht 10, vorzugsweise eine vollständig oder teilweise stabilisierte Zirkonoxidschicht vorhanden. Vorzugsweise wird Yttrium-stabilisiertes Zirkonoxid (YSZ) verwendet, das vorzugsweise 6wt% bis 8wt% Yttrium enthält. Ebenso kann Kalziumoxid, Ceroxid oder Hafniumoxid zur Stabilisierung von Zirkonoxid verwendet werden.

Das Zirkonoxid wird vorzugsweise als plasmagespritzte Schicht aufgetragen, kann aber vorzugsweise auch als kolumnare Struktur mittels Elektronenstrahlverdampfen (EBPVD) aufgebracht werden.

Die Schichtdicke der inneren Schicht 10 beträgt vorzugsweise zwischen 10% und 50% der Gesamtschichtdicke D von innerer Schicht 10 und äußerer Schicht 13 (Fig. 1).

Vorzugsweise liegt die Schichtdicke der inneren Schicht 10 zwischen 10% und 40% oder zwischen 10% und 30% der Gesamtschichtdicke D.

Ebenso vorteilhaft ist es, wenn die Schichtdicke der inneren Schicht 10 10% bis 20% der Gesamtschichtdicke D aufweist. Ebenso vorzugsweise ist es, wenn die Schichtdicke der inneren Schicht 10 zwischen 20% und 50% oder zwischen 20% und 40% der Gesamtschichtdicke D beträgt.

Wenn der Anteil der inneren Schicht 10 an der Gesamtschichtdicke D zwischen 20% und 30% liegt, werden ebenso vorteilhafte Ergebnisse erzielt.

Vorzugsweise beträgt die Schichtdicke der inneren Schicht 10 30% bis 50% der Gesamtschichtdicke D.

Ebenso vorteilhaft ist es, wenn die Schichtdicke der inneren Schicht 10 30% bis 40% der Gesamtschichtdicke D aufweist. Ebenso vorzugsweise ist es, wenn die Schichtdicke der inneren Schicht 10 zwischen 40% und 50% der Gesamtschichtdicke D beträgt.

Obwohl die Pyrochlorphase bessere Wärmedämmungseigenschaften aufweist als die ZrO₂-Schicht, kann die ZrO₂-Schicht genauso dick ausgeführt werden wie die Pyrochlorphase.

Die innere keramische Schicht 10 hat vorzugsweise eine Dicke von 40µm bis 60µm, insbesondere 50µm ± 10 %.

Die Gesamtschichtdicke D von der inneren Schicht 10 und der äußeren Schicht 13 beträgt vorzugsweise 300µm oder vorzugsweise 400 µm. Die maximale Gesamtschichtdicke beträgt vorteilhafterweise 800µm oder vorzugsweise maximal 600µm.

Auf der stabilisierten Zirkonoxidschicht 10 ist dann eine äußere keramische Schicht 13 aufgebracht, die erfindungsgemäß zwei verschiedene Pyrochlorphasen der allgemeinen Summenformel AₓByO_{z} aufweist mit x, y = 2, z = 7, O = Sauerstoff.

Die keramische Schicht weist also verschiedene Pyrochlore AₓB_{y}O_{z} und CᵣDₛOₜ mit r, s = 2, t = 7, O = Sauerstoff, auf.

Die Elemente A, B, C und D können alle untereinander verschieden sein.

Wenn A und C gleich sind, dann sind B und D verschieden. Wenn B und D gleich sind, sind A und C verschieden.

Die Kombination A = C und B = D ist ausgeschlossen.

Die Kombinationen A = D, B ≠ C oder C = B, A ≠ D sind prinzipiell möglich.

Vorzugsweise wird Gadolinium (Gd) für A, C verwendet.

Weitere Beispiele für A, C sind Lanthan (La), Yttrium (Y), Neodym (Nd), Ytterbium (Yb), Cer (Ce) oder Aluminium (Al). Beispiele für B, D sind Hafnium (Hf), Zirkon (Zr), Titan (Ti), Cer (Ce) oder Zinn (Sn).

Vorzugsweise wird ein Hafnat oder ein Zirkonat verwendet, also Hafnium und/oder Zirkon für B, vorzugsweise Gd₂Hf₂O₇ (GHO) und/oder Gd₂Zr₂O₇ (GZO).

Vorzugsweise besteht die äußere keramische Schicht 13 aus zwei Pyrochlorphasen.

Vorzugsweise wird Gd₂Hf₂O₇ und Gd₂Zr₂O₇ verwendet.

Dabei liegt kein Mischkristall der zwei Pyrochlorphasen vor, also bspw. nicht Gdₓ(Hf_{y}Zr_{w})O_{z} mit x= 2, y+w=2, z = 7 (ein Mischkristall weist auch die Pyrochlorphase auf, hat aber auf einem Gitterplatz (A, B) zwei verschiedene Elemente; wenn nicht explizit von einem Mischkristall gesprochen wird, liegt auch keiner vor).

Der Anteil der Mischkristalle Aₓ (B_{y}D_{w}) O_{z}, Cₛ(DₜB_{q})Oₜ oder der Oxide von A, B, C, D (also bspw. Gd, Hf, Zr) liegt maximal bei 20wt%, insbesondere bei maximal 10wt%.

Vorzugsweise liegt der Anteil der zwei Pyrochlorphasen bei mindestens 80wt%, insbesondere bei mindestens 90wt%.

Aber es können auch zwei Mischkristalle oder ein Mischkristall mit einem Nichtmischkristall miteinander vermischt sein, also bspw. Aₓ (B_{y}E_{w}) O_{z} und Cₓ (D_{y}F_{w}) O, mit E≠D und F ≠ B oder AₓB_{y}O_{z} und Cₓ(D_{y}F_{w}) O_{z} mit F ≠ B.

Die äußere keramische Schicht 13 wird daher beispielsweise wie folgt hergestellt: Es wird ein Pulver bestehend aus zwei Pyrochlorphasen, bspw. Gadoliniumzirkonat und ein Pulver aus Gadoliniumhafnat im Mischungsverhältnis miteinander vermischt und der Düse einer Plasmaspritzanlage zugeführt. Andere Beschichtungsverfahren, wie z.B. PVD-Verfahren, bei denen zwei Ingots, bestehend aus Gadoliniumzirkonat und Gadoliniumhafnat, verwendet werden, sind ebenfalls denkbar.

Dabei können beliebige Mischungsverhältnisse von Gadoliniumzirkonat und Gadoliniumhafnat verwendet werden. Vorzugsweise wird ein größerer Anteil von Gadoliniumzirkonat verwendet. Ebenso werden vorzugsweise Mischungsverhältnisse von 10:90, 20:80, 30:70 oder 40:60 für Gadoliniumhafnat zu Gadoliniumzirkonat verwendet. Weiterhin vorteilhaft ist es, Mischungsverhältnisse von 50:50, 60:40, 70:30, 80:20 oder 90:10 für Gadoliniumhafnat zu Gadoliniumzirkonat zu verwenden.

Vorzugsweise wird ein Gemisch aus Gd₂Hf₂O₇ und Gd₂Zr₂O₇ verwendet, die vorzugsweise gleichmäßig miteinander vermischt sind oder einen Gradienten aufweisen. Also beispielsweise ist außen hin zur Heißgasseite ein höherer Anteil von Gd₂Zr₂O₇ vorhanden.

Das Schichtsystem 1 besteht vorzugsweise aus dem Substrat 4, einer Anbindungsschicht 7 (MCrAlY), ggfs. einer TGO und einer äußeren einlagigen (bspw. GZO und/oder GHO) oder zweilagigen Wärmedämmschicht 13 (YSZ und GZO bzw. GHO).

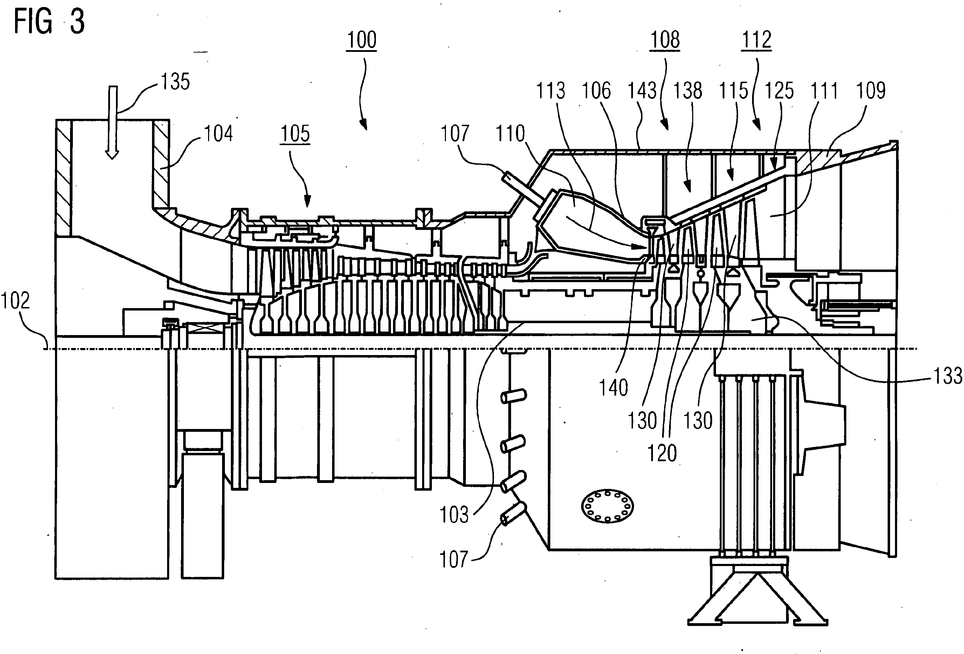

Die Figur 3 zeigt beispielhaft eine Gasturbine 100 in einem Längsteilschnitt.

Die Gasturbine 100 weist im Inneren einen um eine Rotationsachse 102 drehgelagerten Rotor 103 mit einer Welle 101 auf, der auch als Turbinenläufer bezeichnet wird.

Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.

Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.

Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet.

Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierungen Teil der Offenbarung.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

Die Figur 4 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.

Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierung Teil der Offenbarung.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt; diese Schriften sind bzgl. des Erstarrungsverfahrens Teil der Offenbarung.

Ebenso können die Schaufeln 120, 130 erfindungsgemäße Schichtsysteme 1 darstellen oder andere Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 3.97 B1 oder EP 1 306 454 A1, die bzgl. der chemischen Zusammensetzung der Legierung Teil dieser Offenbarung sein sollen.

Die Dichte liegt vorzugsweise bei 95% der theoretischen Dichte.

Auf der MCrA1X-Schicht (als Zwischenschicht oder als äußerste Schicht) bildet sich eine schützende Aluminiumoxidschicht (TGO = thermal grown oxide layer).

Auf der MCrAlX ist noch eine Wärmedämmschicht 13 des erfindungsgemäßen Schichtsystems 1 vorhanden.

Die Wärmedämmschicht 13 bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

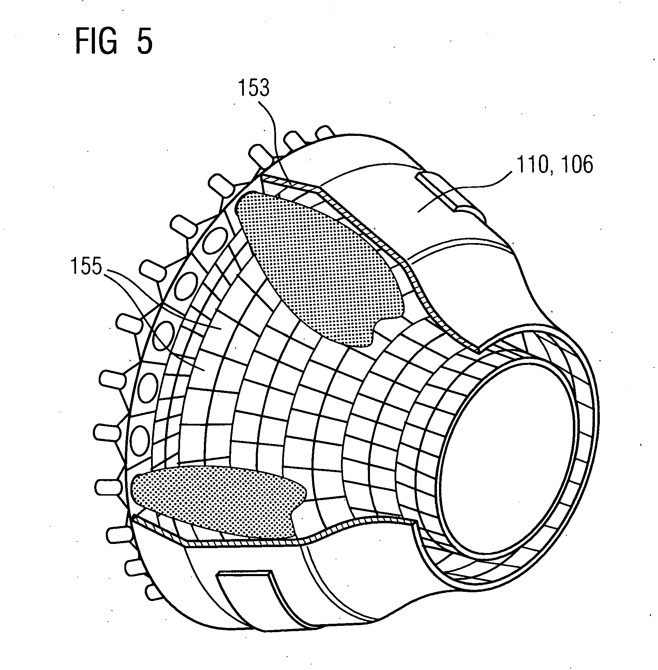

Die Figur 5 zeigt eine Brennkammer 110 der Gasturbine 100. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

Jedes Hitzeschildelement 155 aus einer Legierung ist arbeitsmediumsseitig mit einer besonders hitzebeständigen Schutzschicht (MCrA1X-Schicht und/oder keramische Beschichtung) ausgestattet, also stellt das erfindungsgemäße Schichtsystem 1 dar, oder ist aus hochtemperaturbeständigem Material (massive keramische Steine) gefertigt.

Diese Schutzschichten können ähnlich der Turbinenschaufeln sein, also bedeutet beispielsweise MCrA1X: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrAlX kann noch eine erfindungsgemäße keramische Wärmedämmschicht 13 vorhanden sein.

Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Turbinenschaufeln 120, 130, Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in der Turbinenschaufel 120, 130 oder dem Hitzeschildelement 155 repariert. Danach erfolgt eine Wiederbeschichtung der Turbinenschaufeln 120, 130, Hitzeschildelemente 155 und ein erneuter Einsatz der Turbinenschaufeln 120, 130 oder der Hitzeschildelemente 155.

## Patentansprüche

1. Schichtsystem
aufweisend ein Substrat (4),
auf dem eine äußere keramische Schicht (13) vorhanden ist, die (13) ein Gemisch von zwei verschiedenen Pyrochlorphasen der allgemeinen Summenformel AₓB_{y}O_{z} mit x, y = 2, z = 7 aufweist,
bei dem die äußere keramische Schicht (13) maximal 20wt% eines Mischkristalls der Pyrochlorphasen aufweist und bei dem die äußere keramische Schicht (13) aus mindestens 80wt% der zwei verschiedenen Pyrochlorphasen besteht.

2. Schichtsystem nach Anspruch 1, bei dem
A Gadolinium (Gd) ist.

3. Schichtsystem nach Anspruch 1, bei dem
Gadolinium bei beiden Pyrochlorphasen für A verwendet wird.

4. Schichtsystem nach Anspruch 1, 2 oder 3, bei dem die eine Pyrochlorphase ein Hafnat ist.

5. Schichtsystem nach Anspruch 1, 2 oder 3, bei dem die eine Pyrochlorphase ein Zirkonat ist.

6. Schichtsystem nach Anspruch 1, bei dem die eine Pyrochlorphase Gadoliniumzirkonat (Gd₂Zr₂O₇) ist.

7. Schichtsystem nach Anspruch 1, bei dem die eine Pyrochlorphase Gadoliniumhafnat (Gd₂Hf₂O₇) ist.

8. Schichtsystem nach Anspruch 1, 2, 3, 4, 5, 6 oder 7, bei dem unter der keramischen Schicht (13) eine innere keramische Schicht (10), vorhanden ist.

9. Schichtsystem nach Anspruch 8, bei dem
die innere Schicht (10) eine Schichtdicke zwischen 10% und 50% der Gesamtschichtdicke (D) der inneren keramischen Schicht (10) und der äußeren keramischen Schicht (13) aufweist.

10. Schichtsystem nach Anspruch 8 oder 9, bei dem
die Schichtdicke der inneren Schicht (10) und der äußeren Schicht (13) zusammen 300µm beträgt.

11. Schichtsystem nach Anspruch 8 oder 9, bei dem
die Schichtdicke der inneren Schicht (10) und der äußeren Schicht (13) zusammen 400µm beträgt.

12. Schichtsystem nach Anspruch 1, bei dem
das Schichtsystem (1) eine metallische Anbindungsschicht (7),
auf dem Substrat (4) aufweist.

13. Schichtsystem nach Anspruch 12, bei dem
die metallische Anbindungsschicht (7) die Zusammensetzung (in wt%)
| | |
|---|---|
| 11% - 13% | Kobalt, |
| 20% - 22% | Chrom, |
| 10,5% - 11,5% | Aluminium, |
| 0,3% - 0,5% | Yttrium, |
| 1,5% - 2,5% | Rhenium und |
Rest Nickel aufweist.

14. Schichtsystem nach Anspruch 12, bei dem
die metallische Anbindungsschicht (7) die Zusammensetzung (in wt%)
| | |
|---|---|
| 24% - 26% | Kobalt, |
| 16% - 18% | Chrom, |
| 9% - 11% | Aluminium, |
| 0,3% - 0,5% | Yttrium, |
| 1% - 2% | Rhenium, und |
Rest Nickel aufweist.

15. Schichtsystem nach Anspruch 1,
bei dem
die metallische Anbindungsschicht (7) die Zusammensetzung (in wt%)
| | |
|---|---|
| 29% - 31% | Nickel, |
| 27% - 29% | Chrom, |
| 7% - 9% | Aluminium, |
| 0,5% - 0,7% | Yttrium, |
| 0,6% - 0,8% | Silizium und |
Rest Kobalt aufweist.

16. Schichtsystem nach Anspruch 1,
bei dem
die metallische Anbindungsschicht (7) die Zusammensetzung (in wt%)
| | |
|---|---|
| 27% - 29% | Nickel, |
| 23% - 25% | Chrom, |
| 9% - 11% | Aluminium, |
| 0,5% - 0,7% | Yttrium, und |
Rest Kobalt aufweist.

17. Schichtsystem nach Anspruch 1, 2, 3, 4, 5, 6 oder 7, bei dem
die keramische Schicht (13) keine Mischkristalle aufweist.

18. Schichtsystem nach Anspruch 1, 2, 3, 4, 5, 6 oder 7, bei dem
das Mischungsverhältnis von erster und zweiter Pyrochlorphase 10:90 beträgt.

19. Schichtsystem nach Anspruch 1, 2, 3, 4, 5, 6 oder 7, bei dem
das Mischungsverhältnis von erster und zweiter Pyrochlorphase 20:80 beträgt.

20. Schichtsystem nach Anspruch 1, 2, 3, 4, 5, 6 oder 7, bei dem
das Mischungsverhältnis von erster und zweiter Pyrochlorphase 30:70 beträgt.

21. Schichtsystem nach Anspruch 1, 2, 3, 4, 5, 6 oder 7, bei dem
das Mischungsverhältnis von erster und zweiter Pyrochlorphase 40:60 beträgt.

22. Schichtsystem nach Anspruch 1, 2, 3, 4, 5, 6 oder 7, bei dem
das Mischungsverhältnis von erster und zweiter Pyrochlorphase 50:50 beträgt.

23. Schichtsystem nach Anspruch 1, 2, 3, 4, 5, 6 oder 7, bei dem
das Mischungsverhältnis von erster und zweiter Pyrochlorphase 60:40 beträgt.

24. Schichtsystem nach Anspruch 1, 2, 3, 4, 5, 6 oder 7, bei dem
das Mischungsverhältnis von erster und zweiter Pyrochlorphase 70:30 beträgt.

25. Schichtsystem nach Anspruch 1, 2, 3, 4, 5, 6 oder 7, bei dem
das Mischungsverhältnis von erster und zweiter Pyrochlorphase 80:20 beträgt.

26. Schichtsystem nach Anspruch 1, 2, 3, 4, 5, 6 oder 7, bei dem
das Mischungsverhältnis von erster und zweiter Pyrochlorphase 90:10 beträgt.

27. Schichtsystem nach Anspruch 1, 2, 3, 4, 6 oder 7, bei dem
die zwei Pyrochlorphasen mindestens 90wt%, insbesondere mindestens 95wt% der keramischen Schicht (13) ergeben.

## Claims

1. Layer system
having a substrate (4),
on which there is an outer ceramic layer (13) which includes a mixture of two different pyrochlore phases of the general empirical formula AₓB_{y}O_{z} where x, y = 2, z = 7, in which the outer ceramic layer (13) includes a maximum of 20 wt% of a solid solution of the pyrochlore phases and in which the outer ceramic layer (13) comprises at least 80 wt% of the two different pyrochlore phases.

2. Layer system according to Claim 1,
in which
A is gadolinium (Gd).

3. Layer system according to Claim 1,
in which
gadolinium is used for A in both pyrochlore phases.

4. Layer system according to Claim 1, 2 or 3,
in which
one pyrochlore phase is a hafnate.

5. Layer system according to Claim 1, 2 or 3,
in which
one pyrochlore phase is a zirconate.

6. Layer system according to Claim 1,
in which
one pyrochlore phase is gadolinium zirconate (Gd₂Zr₂O₇).

7. Layer system according to Claim 1,
in which
one pyrochlore phase is gadolinium hafnate (Gd₂Hf₂O₇)

8. The layer system according to claim 1, 2, 3, 4, 5, 6 or 7, in which
an inner ceramic layer (10) is present beneath the ceramic layer (13).

9. Layer system according to Claim 8,
in which
the inner layer (10) has a layer thickness of between 10% and 50% of the total layer thickness (D) of the inner ceramic layer (10) and the outer ceramic layer (13).

10. Layer system according to Claim 8 or 9,
in which
the layer thickness of the inner layer (10) and the outer layer (13) together amounts to 300 µm.

11. Layer system according to Claim 8 or 9,
in which
the layer thickness of the inner layer (10) and the outer layer (13) together amounts to 400 µm.

12. Layer system according to Claim 1
in which
the layer system (1) has a metallic bonding layer (7) on the substrate (4).

13. Layer system according to Claim 12,
in which
the metallic bonding layer (7) has the composition (in wit%)
| | |
|---|---|
| 11% - 13% | cobalt, |
| 20% - 22% | chromium, |
| 10.5% - 11.5% | aluminum, |
| 0.3% - 0.5% | yttrium, |
| 1.5% - 2.5% | rhenium and |
remainder nickel.

14. Layer system according to Claim 12,
in which
the metallic bonding layer (7) has the composition (in wt%)
| | |
|---|---|
| 24% - 26% | cobalt, |
| 16% - 18% | chromium, |
| 9% - 11% | aluminum, |
| 0.3% - 0.5% | yttrium, |
| 1% - 2% | rhenium, and |
remainder nickel.

15. Layer system according to Claim 1,
in which
the metallic bonding layer (7) has the composition (in wt%)
| | |
|---|---|
| 29% - 31% | nickel, |
| 27% - 29% | chromium, |
| 7% - 9% | aluminum, |
| 0.5% - 0.7% | yttrium, |
| 0.6% - 0.8% | silicon and |
remainder cobalt.

16. Layer system according to Claim 1,
in which
the metallic bonding layer (7) has the composition (in wt%)
| | |
|---|---|
| 27% - 29% | nickel, |
| 23% - 25% | chromium, |
| 9% - 11% | aluminum, |
| 0.5% - 0.7% | yttrium and |
remainder cobalt.

17. Layer system according to Claim 1, 2, 3, 4, 5, 6 or 7, in which
the ceramic layer (13) does not include a solid solution.

18. Layer system according to Claim 1, 2, 3, 4, 5, 6 or 7,
in which
the mixing ratio of first and second pyrochlore phase is 10:90.

19. Layer system according to Claim 1, 2, 3, 4, 5, 6 or 7,
in which
the mixing ratio of first and second pyrochlore phase is 20:80.

20. Layer system according to Claim 1, 2, 3, 4, 5, 6 or 7,
in which
the mixing ratio of first and second pyrochlore phase is 30:70.

21. Layer system according to Claim 1, 2, 3, 4, 5, 6 or 7,
in which
the mixing ratio of first and second pyrochlore phase is 40:60.

22. Layer system according to Claim 1, 2, 3, 4, 5, 6 or 7,
in which
the mixing ratio of first and second pyrochlore phase is 50:50.

23. Layer system according to Claim 1, 2, 3, 4, 5, 6 or 7,
in which
the mixing ratio of first and second pyrochlore phase is 60:40.

24. Layer system according to Claim 1, 2, 3, 4, 5, 6 or 7,
in which
the mixing ratio of first and second pyrochlore phase is 70:30.

25. Layer system according to Claim 1, 2, 3, 4, 5, 6 or 7,
in which
the mixing ratio of first and second pyrochlore phase is 80:20.

26. Layer system according to Claim 1, 2, 3, 4, 5, 6 or 7,
in which
the mixing ratio of first and second pyrochlore phase is 90:10.

27. Layer system according to Claim 1, 2, 3, 4, 5, 6 or 7,
in which
the two pyrochlore phases amount to at least 90 wt%, in particular at least 95 wt% of the ceramic layer (13).

## Revendications

1. Système de couches
comprenant un substrat (4),
sur lequel il y a une couche (13) extérieure en céramique,
qui (13) comprend un mélange de deux phases pyrochlore différentes de formule générale AₓB_{y}O_{z} avec x, y = 2, z = 7,
dans lequel la couche (13) extérieure en céramique comprend au maximum 20% en poids d'un cristal mixte des phases pyrochlore et dans lequel la couche (13) extérieure en céramique est constituée pour au moins 80% en poids des deux phases pyrochlore différentes.

2. Système de couches suivant la revendication 1, dans lequel A est le gadolinium (Gd).

3. Système de couches suivant la revendication 1, dans lequel on utilise pour A du gadolinium dans les deux phases pyrochlore.

4. Système de couches suivant la revendication 1, 2 ou 3, dans lequel
l'une des phases pyrochlore est un hafnate.

5. Système de couches suivant la revendication 1, 2 ou 3, dans lequel
l'une des phases pyrochlore est un zirconate.

6. Système de couches suivant la revendication 1, dans lequel l'une des phases pyrochlore est du zirconate de gadolinium (Gd₂Zr₂O₇).

7. Système de couches suivant la revendication 1, dans lequel l'une des phases pyrochlore est de l'hafnate de gadolinium (Gd₂Hf₂O₇).

8. Système de couches suivant la revendication 1, 2, 3, 4, 5, 6 ou 7, dans lequel
une couche (10) intérieure en céramique est présente sous la couche (13) en céramique.

9. Système de couches suivant la revendication 8, dans lequel la couche (10) intérieure a une épaisseur représentant entre 10% et 50% de l'épaisseur (D) totale de la couche (10) intérieure en céramique et de la couche (13) extérieure en céramique.

10. Système de couches suivant la revendication 8 ou 9, dans lequel
l'épaisseur de la couche (10) intérieure et de la couche (13) extérieure représente ensemble 300 µm.

11. Système de couches suivant la revendication 8 ou 9, dans lequel
l'épaisseur de la couche (10) intérieure et de la couche (13) extérieure représente ensemble 400 µm.

12. Système de couches suivant la revendication 1, dans lequel le système (1) de couches comprend une couche (7) métallique d'accrochage au substrat (4).

13. Système de couches suivant la revendication 12, dans lequel
la couche (7) métallique d'accrochage a la composition (en % en poids)
| | |
|---|---|
| de 11% à 13% | de cobalt, |
| de 20% à 22% | de chrome, |
| de 10,5% à 11,5% | d'aluminium, |
| de 0,3% à 0,5% | d'yttrium, |
| de 1,5% à 2,5% | de rhénium et |
le reste étant du nickel.

14. Système de couches suivant la revendication 12, dans lequel
la couche (7) métallique d'accrochage a la composition (en % en poids)
| | |
|---|---|
| de 24% à 26% | de cobalt, |
| de 16% à 18% | de chrome, |
| de 9% à 11% | d'aluminium, |
| de 0,3% à 0,5% | d'yttrium, |
| de 1% à 2% | de rhénium et |
le reste étant du nickel.

15. Système de couches suivant la revendication 1,
dans lequel
la couche (7) métallique d'accrochage a la composition (en % en poids)
| | |
|---|---|
| de 29% à 31% | de cobalt, |
| de 27% à 29% | de chrome, |
| de 7% à 9% | d'aluminium, |
| de 0,5% à 0,7% | d'yttrium, |
| de 0,6% à 0,8% | de silicium et |
le reste étant du cobalt.

16. Système de couches suivant la revendication 1, dans lequel
la couche (7) métallique d'accrochage a la composition (en % en poids)
| | |
|---|---|
| de 27% à 29% | de cobalt, |
| de 23% à 25% | de chrome, |
| de 9% à 11% | d'aluminium, |
| de 0,5% à 0,7% | d'yttrium et |
le reste étant du cobalt.

17. Système de couches suivant la revendication 1, 2, 3, 4, 5, 6 ou 7,
dans lequel
la couche (13) en céramique n'a pas de cristaux mixtes.

18. Système de couches suivant la revendication 1, 2, 3, 4, 5, 6 ou 7,
dans lequel
le rapport de mélange de la première et de la deuxième phases pyrochlore est 10:90.

19. Système de couches suivant la revendication 1, 2, 3, 4, 5, 6 ou 7,
dans lequel
le rapport de mélange de la première et de la deuxième phases pyrochlore est 20:80.

20. Système de couches suivant la revendication 1, 2, 3, 4, 5, 6 ou 7,
dans lequel
le rapport de mélange de la première et de la deuxième phases pyrochlore est 30:70.

21. Système de couches suivant la revendication 1, 2, 3, 4, 5, 6 ou 7,
dans lequel
le rapport de mélange de la première et de la deuxième phases pyrochlore est 40:60.

22. Système de couches suivant la revendication 1, 2, 3, 4, 5, 6 ou 7,
dans lequel
le rapport de mélange de la première et de la deuxième phases pyrochlore est 50:50.

23. Système de couches suivant la revendication 1, 2, 3, 4, 5, 6 ou 7,
dans lequel
le rapport de mélange de la première et de la deuxième phases pyrochlore est 60:40.

24. Système de couches suivant la revendication 1, 2, 3, 4, 5, 6 ou 7,
dans lequel
le rapport de mélange de la première et de la deuxième phases pyrochlore est 70:30.

25. Système de couches suivant la revendication 1, 2, 3, 4, 5, 6 ou 7,
dans lequel
le rapport de mélange de la première et de la deuxième phases pyrochlore est 80:20.

26. Système de couches suivant la revendication 1, 2, 3, 4, 5, 6 ou 7,
dans lequel
le rapport de mélange de la première et de la deuxième phases pyrochlore est 90:10.

27. Système de couches suivant la revendication 1, 2, 3, 4, 6 ou 7,
dans lequel
les deux phases pyrochlore représentent au moins 90% en poids,
notamment au moins 95% en poids de la couche (13) céramique.
